# EUROPÄISCHE PATENTSCHRIFT

(11) **EP 1 175 319 B1**
(45) Veröffentlichungstag und Bekanntmachung des Hinweises auf die Patenterteilung: **04.01.2006**
(21) Anmeldenummer: 01913660.5
(22) Anmeldetag: 16.02.2001
(51) Int. Cl.: B60T 7/04, G01L 5/22, G01L 1/14

(54) **MESSVORRICHTUNG UND VERFAHREN ZUR ERFASSUNG EINER KRAFT**
MEASURING DEVICE AND METHOD FOR DETECTING A FORCE
DISPOSITIF DE MESURE ET PROCEDE DE DETECTION D'UNE FORCE

(30) Priorität: 26.02.2000 DE 10009168
(43) Veröffentlichungstag der Anmeldung: 30.01.2002
(73) Patentinhaber: ROBERT BOSCH GMBH, 70442 Stuttgart (DE)
(72) Erfinder: HOFSAESS, Michael, 71665 Vaihingen/Enz (DE)
(86) Internationale Anmeldenummer: PCT/DE2001/000591
(87) Internationale Veröffentlichungsnummer: WO 2001/062564

(56) Entgegenhaltungen:
- DE-A- 4 332 470
- DE-A- 19 724 387
- DE-A- 19 838 037
- DE-A- 19 855 358
- US-A- 3 726 369

## Beschreibung

### Stand der Technik

Die Erfindung betrifft eine Messvorrichtung zur Erfassung einer Kraft sowie ein Verfahren zur Erfassung einer Kraft. Insbesondere betrifft die vorliegende Erfindung eine Messvorrichtung sowie ein Verfahren zur Erfassung einer durch einen Fahrer ausgeübten Pedalkraft bei einem Fahrzeug.

Insbesondere auf dem Fahrzeugsektor finden in jüngster Zeit immer mehr elektronische System wie z.B. Antiblockiersysteme, Antischlupfregelungen oder elektronische Bremssysteme Anwendung. Insbesondere für elektronische Bremssysteme ist es notwendig, die durch den Fahrer auf das Bremspedal ausgeübte Kraft möglichst genau zu erfassen, um eine entsprechende Bremsanweisung an die Bremseinrichtungen des Fahrzeugs zu geben. Eine Verwendung von bereits bekannten Wegmesseinrichtungen ist dahingehend nachteilig, dass keine konstante Zuordnung des Verhältnisses des Weges zur Kraft möglich ist. D.h. es ist keine Ableitung des Fahrerwunsches aus dem Wegsignal möglich. Weiterhin ist eine Anbringung am Fußhebelwerk des Pedals erforderlich, was zu ungünstigen Einbaugeometrien im Pedalbereich führen kann. Weiter muß für Fahrzeuge mit Rechts-/Linkslenkung und Automatik-/Schaltgetriebe jeweils ein besonderer Sensor für die unterschiedlichen Geometrien der Pedale bereitgehalten werden.

Des Weiteren sind Druckmessvorrichtungen bekannt, welche beispielsweise über Membranverformung arbeiten oder piezoelektrische Elemente verwenden. Bei der Verwendung von Druckmessvorrichtungen für die Erfassung der Bremspedalkraft ist jedoch nachteilig, dass der Fahrerwunsch nicht unmittelbar erhältlich ist. Auch ist eine (dämpfungsabhängige) relativ schlechte Dynamik der Druckmessvorrichtung vorhanden, und es wird ein relativ stark hysteresebehaftetes Ausgangssignal erhalten.

Aus der DE 198 55 358 A1 ist ein Wegsensor bekannt, der wenigstens einen analog arbeitenden Sensor aufweist, der in Abhängigkeit von dem zu messenden Weg ein Analogsignal ausgibt. Ferner sind inkremental arbeitende Sensoren vorhanden, die in Abhängigkeit vom zu messenden Weg ein Impulsfolgesignal ausgeben. Zur Bestimmung des zu messenden Wegs werden das Analogsignal und das Impulsfolgesignal in Beziehung zueinander gesetzt und ausgewertet.

Aus der DE 198 38 037 A1 ist ein Pedalwegsimulator bekannt, mit dem ein Rückstellmittel eine Rückstellkraft auf das Pedal ausübt. Dieses Rückstellmittel weist wenigstens zwei Magnete auf, deren sich gegenseitig abstoßende Pole einander zugewandt sind. Mit Hilfe von Sensoren, die in Wirkverbindung mit dem Magneten stehen, kann die Stellung des Pedals auf einfache Weise in ein elektrisches Signal umgewandelt werden.

Beim Wegsensor nach der DE 197 24 387 A1 wird die Längsbewegung eines mechanischen Bauelements, z. B. eines Bremspedals, in eine Drehbewegung eines Sensorelements umgesetzt. Das Sensorelement trägt dabei einen Magneten, dessen Feldlinien in Abhängigkeit von seiner Drehlage eine Detektionseinrichtung in unterschiedlicher Richtung schneiden und dadurch ein elektrisches Ausgangssignal erzeugen.

Beim Bremspedal nach der US 3,726,369 wird mit Hilfe eines Schalters ein Stromkreis geöffnet bzw. geschlossen, sodass eine Spule stromdurchflossen sein kann. Das von der Spule erzeugte magnetische Feld steht in Wirkverbindung mit einem Kolben, sodass der Bremskreis beeinflusst werden kann.

In der DE 43 32 470 A1 wird ein Manometer zum Messen der Differenz zweier Drücke beschrieben. Die Auslenkung einer zwischen den beiden Druckkammern befindlichen Biegefeder ist ein Maß für die Druckdifferenz, das Messprinzip beruht auf Vergleichsmessungen von Kapazitäten zwischen der Messfeder und Referenzfedern.

### Vorteile der Erfindung

Eine erfindungsgemäße Messvorrichtung zur Erfassung einer Kraft mit den Merkmalen des Anspruchs 1 hat demgegenüber den Vorteil, dass eine direkte Erfassung des Fahrerwunsches möglich ist. Aufgrund der direkten Erfassung des Fahrerwunsches ist es auch möglich, einen kleineren Bremskraftverstärker zu verwenden. Weiter treten in geringerem Maße Hysteresen auf und es ist eine einfachere Bremsverzögerungsregelung möglich. Weiter können auch Einbremsvorgänge, d.h. Zustände beim Beginn des Bremsvorgangs, vorzeitig erkannt werden. Vorteilhaft weist auch das Ausgangssignal einer erfindungsgemäßen Messvorrichtung zur Erfassung einer Kraft eine hohe Dynamik auf. Dadurch kann das Signal insbesondere vorteilhaft bei den Funktionen eines Bremsassistenten verwendet werden. Vorzugsweise kann bei Verwendung einer Kraftmessvorrichtung in Kombination mit einem Wegsensor und Drucksensoren eine optimale Steuerung bzw. Überwachung einer Radbremsanlage eines Kraftfahrzeugs (Fahrerwarnung, Serviceinfos, Diagnosespeicher) erreicht werden. Da die erfindungsgemäße Messvorrichtung zur Erfassung einer Kraft ein von einer Trägerplatte vorstehendes Zungenelement aufweist, welchesmit z.B. einer Pedalplatte verbindbar ist, kann die erfindungsgemäße Messvorrichtung direkt an der Pedalplatte eingebaut werden. Damit lassen sich Nachteile eines Einbaus einer Messvorrichtung am Fußhebelwerk des Pedalhebels verhindern. Weiter kann die erfindungsgemäße Kraftmesseinrichtung aufgrund der Anbringung direkt am Bremspedal ohne konstruktive Änderungen bei unterschiedlichsten Pedalgeometrien verwendet werden.

Durch die Anordnung eines Magneten am Zungenelement der Kraftmessvorrichtung oder an der Trägerplatte der Kraftmessvorrichtung kann ein einfacher und Platz sparender Aufbau erreicht werden.

Vorzugsweise ist das Zungenelement einstückig mit der Trägerplatte gebildet. Dies kann beispielsweise durch Ausstanzen des Zungenelements von der Trägerplatte erreicht werden. Dadurch lässt sich die erfindungsgemäße Kraftmessvorrichtung einfach und kostengünstig herstellen.

Um eine Verstärkung des Messeffekts zu erreichen, weist die erfindungsgemäße Kraftmessvorrichtung zwei Magnete auf, welche vorzugsweise gegeneinander gepolt sind. Hierbei kann beispielsweise ein erster Magnet am Zungenelement und ein zweiter Magnet an der Trägerplatte befestigt werden. Bei einer Anordnung, bei der die beiden Magnete gegeneinander gepolt sind, kommt es aufgrund einer im Luftspalt zwischen dem Zungenelement und der Trägerplatte gleich gerichteten Polarisierung der beiden Magnete zu einer starken Feldverdrängung, was den hohen Messeffekt sicherstellt. Dies ermöglicht es weiter, dass ein Winkel, in welchem das Zungenelement von der Trägerplatte vorsteht, kleiner ausgebildet werden kann. Dadurch ergibt sich ein sehr kompakter Aufbau der Kraftmessvorrichtung.

Vorzugsweise ist zur Begrenzung der Bewegung des Zungenelements ein Anschlag vorgesehen. Dieser Anschlag kann beispielsweise an der Trägerplatte an der Pedalplatte ausgebildet sein. Durch die Verwendung eines Anschlags kann auch weiter eine hohe Überlastfähigkeit der Kraftmessvorrichtung sichergestellt werden.

Vorzugsweise ist das Zungenelement als balkenförmiges Element ausgebildet. Hierdurch lässt sich insbesondere ein kleiner Luftspalt zwischen dem Zungenelement und der Trägerplatte erreichen. Dadurch kann die erfindungsgemäße Kraftmessvorrichtung eine hohe Störsicherheit aufweisen. Dadurch kann der Einfluss von magnetischen Störgrößen wie z.B. eine Anlasserbetätigung oder metallhaltige Kleidung oder metallhaltiges Schuhwerk in der Nähe des Pedals vernachlässigt werden. Auch kann über eine geometrische Auslegung des Zungenelements und des Magnetflusses die Messempfindlichkeit und die Überlastfähigkeit der Kraftmessvorrichtung eingestellt werden. Dadurch kann eine Kombination einer hohen Empfindlichkeit im gewünschten Messbereich mit einer hohen Überlastfähigkeit erreicht werden.

Insbesondere vorteilhaft kann die erfindungsgemäße Kraftmessvorrichtung mit anderen Sensoren wie z.B. Weg- oder Drucksensoren zur Aufnahme einer ausgeübten Bremskraft kombiniert werden. Hierbei ist die Kraftmessvorrichtung für die Aufnahme von kleinen Kräften (50 bis 80 Newton) verantwortlich, welche sehr gut aufgelöst werden müssen, um entsprechende Signale an die Bremssteuerung abgeben zu können. Für größere Kräfte ab ca. 300 Newton kann die Kraftmessvorrichtung am Anschlag anliegen und die weitere Aufnahme der größeren Fahrerfußkräfte kann mittels der anderen Sensoren aufgenommen werden. Somit ist insbesondere eine exakte Messung der Bremsantrittskraft zu Beginn der Bremsung sowie die Kraft bei leichten Bremsungen exakt erfassbar.

Als magnetempfindliches Element der Kraftmessvorrichtung kann beispielsweise eine Feldplatte, ein Magnettransistor, eine Spule, ein magnetoresistives Element oder ein Hall-Element verwendet werden. Hierbei ist wichtig, dass das magnetempfindliche Element eine möglichst lineare Abhängigkeit eines Ausgangssignals von der magnetischen Induktion aufweist. Es ist hierbei möglich, mit einem oder aus Sicherheitsgründen zur Bereitstellung eines redundanten Systems auch mit zwei oder mehreren magnetempfindlichen Elementen zu arbeiten.

Die erfindungsgemäße Kraftmessvorrichtung kann kostengünstig mit bereits bekannten Bauelementen aufgebaut werden. Da der notwendige Bauraum sehr gering ist, kann die Kraftmessvorrichtung problemlos z.B. hinter einer Pedalplatte eines Kraftfahrzeugs angeordnet werden. Dabei ist eine Anwendung bei unterschiedlich aufgebauten Pedalen und unterschiedliche aufgebauten Pedalaufhängungen möglich. Hierbei kann die Kraftmessvorrichtung auch problemlos bei rechts- oder linksgelenkten Fahrzeugen sowie Fahrzeugen mit automatischem Getriebe oder mit Handschaltgetriebe ohne Änderungen an der Kraftmessvorrichtung eingebaut werden. Dies ermöglicht eine Standardisierung der Kraftmessvorrichtung und somit große Herstellungs- und Kostenvorteile.

Weiterhin wird erfindungsgemäß ein Verfahren zur Erfassung einer Kraft vorgeschlagen, wobei eine Kraft, welche über ein bewegliches Zungenelement zugeführt wird, in eine Relativbewegung zwischen dem Zungenelement und einer Trägerplatte umgewandelt wird. Die Relativbewegung zwischen dem Zungenelement und der Trägerplatte führt zu einer Änderung einer magnetischen Induktion in einem dazwischen angeordneten Luftspalt, welche durch ein im Luftspalt angeordnetes magnetempfindliches Element erfassbar ist. Dies ermöglicht eine direkte Erfassung der auf die Kraftmessvorrichtung ausgeübten Kraft.

### Zeichnung

Mehrere Ausführungsbeispiele der Erfindung sind in der Zeichnung dargestellt und werden in der nachfolgenden Beschreibung näher erläutert.
Figur 1 zeigt eine Draufsicht einer Kraftmessvorrichtung gemäß einem ersten Ausführungsbeispiel der vorliegenden Erfindung,
Figur 2 zeigt eine Seitenaufsicht der in Figur 1 dargestellten Kraftmessvorrichtung,
Figur 3 zeigt eine perspektivische Ansicht einer Pedalanordnung, bei der eine Kraftmessvorrichtung gemäß einem zweiten Ausführungsbeispiel der vorliegenden Erfindung verwendet wird,
Figur 4 zeigt eine perspektivische Ansicht der in Figur 3 dargestellten Pedalanordnung, wobei die Pedalplatte gestrichelt dargestellt ist,
Figur 5 zeigt die in den Figuren 3 und 4 dargestellte Kraftmessvorrichtung in perspektivischer Ansicht,
Figur 6 zeigt eine Seitenansicht der in den Figuren 3 bis 5 gezeigten Pedalanordnung,
Figur 7 zeigt eine vergrößerte perspektivische Darstellung der in Figur 5 dargestellten Kraftmessvorrichtung gemäß dem zweiten Ausführungsbeispiel der vorliegenden Erfindung und
Figur 8 zeigt eine vergrößerte Darstellung der in Figur 6 gezeigten Seitenansicht der Kraftmessvorrichtung gemäß dem zweiten Ausführungsbeispiel.

### Beschreibung der Ausführungsbeispiele

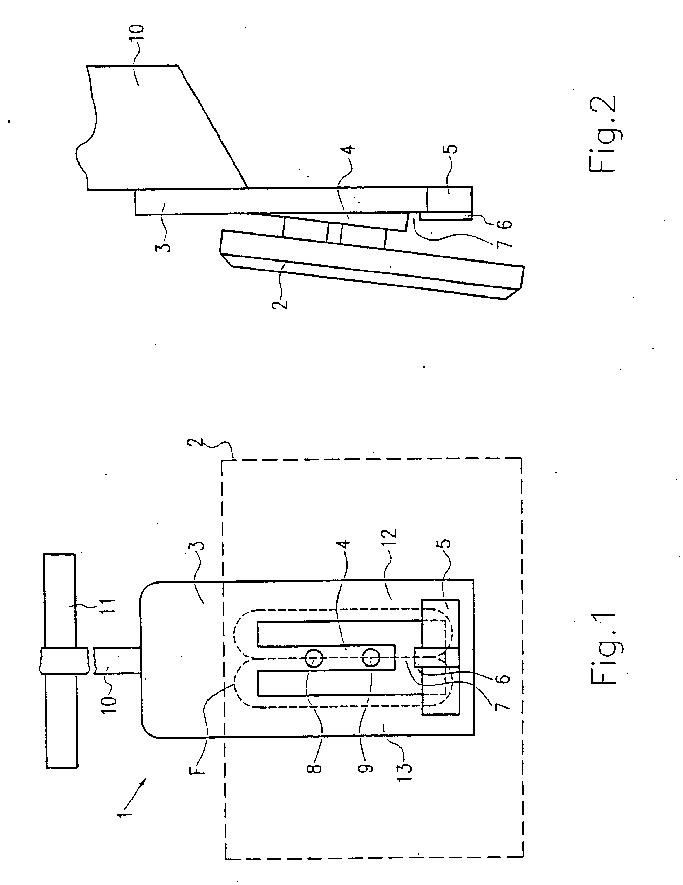

In den Figuren 1 und 2 ist ein erstes Ausführungsbeispiel der erfindungsgemäßen Kraftmessvorrichtung dargestellt. Diese Kraftmessvorrichtung 1 wird dabei in einer Pedalanordnung eines Kraftfahrzeugs verwendet. Wie in Figur 1 gezeigt, umfasst die Kraftmessvorrichtung 1 eine Trägerplatte 3 und ein Zungenelement 4. Das Zungenelement 4 ist mit der Trägerplatte 3 einstückig gebildet und beispielsweise durch Ausstanzen hergestellt. Wie in Figur 2 gezeigt, steht das Zungenelement 4 teilweise von der Trägerplatte 3 vor. Hierbei ist das Zungenelement 4 federnd ausgebildet, so dass es bei Nichtbetätigung des Pedals in seine Ausgangsstellung zurückkehrt. Weiter weist das Zungenelement 4 zwei Durchgangsöffnungen 8 und 9 auf, durch welche Bolzen geführt sind, um das Zungenelement 4 mit einer Pedalplatte 2 zu verbinden.

Wie in Figur 1 gezeigt, ist das Zungenelement 4 balkenförmig ausgebildet und zwischen dem Zungenelement 4 und der Trägerplatte 3 ist ein Luftspalt 7 gebildet. In diesem Luftspalt 7 ist ein magnetempfindliches Element 6 wie z.B. ein Hall-Element oder ein magnetoresistives Element angeordnet. Wie in Figur 1 gezeigt, ist weiter ein Magnet 5 vorgesehen, welcher an der Trägerplatte 3 derart angeordnet ist, dass das magnetempfindliche Element 6 zwischen dem Magneten 5 und dem Zungenelement 4 angeordnet ist.

Weiter ist die Trägerplatte 3 mit einem Bremspedalhebel 10 verbunden, welcher an einem Lager 11 drehbar gelagert ist. Die beiden Seitenteile der Trägerplatte 3 sind als Anschläge 12 und 13 ausgebildet. Weiter ist in Figur 1 der Magnetfluss F der Kraftmessvorrichtung dargestellt. Ausgehend vom Magneten 5 geht der Magnetfluss über das magnetempfindliche Element 6 und dem Luftspalt 7 zum Zungenelement 4 und wird über die Trägerplatte 3 und die beiden seitlichen Anschläge 12 und 13 zurück zum Magneten geführt.

Nachfolgend wird die Funktionsweise der Kraftmessvorrichtung gemäß dem ersten Ausführungsbeispiel beschrieben. Wenn ein Fahrer einen Bremsvorgang durch Ausüben einer Fußkraft auf die Pedalplatte 2 einleitet, wird das mit der Pedalplatte 2 fest verbundene Zungenelement 4 um eine nicht dargestellte Achse, an der das Zungenelement 4 mit der Trägerplatte 3 verbunden ist, gedreht. Das heißt, die Zunge 4 wird durch die ausgeübte Kraft in Richtung der Trägerplatte 3 gedrückt, bis es mit der Trägerplatte 3 in einer Ebene liegt. Dadurch wird das Magnetfeld im magnetempfindlichen Element 6 verändert, da die resultierende Feldgeometrie im Luftspalt 7 verändert wird. Das heißt, durch das Eintreten des Zungenelements 4 in den Magnetkreis F ändert sich die Flussdichte im magnetempfindlichen Element 6. Diese Änderung ist analog zur Biegung bzw. Bewegung des Zungenelements 4, welche ihrerseits analog zur auf das Bremspedal 2 ausgeübten Kraft ist. Somit wird die ausgeübte Kraft direkt in eine geänderte Magnetfeldstärke umgesetzt.

Wie in Figur 2 ersichtlich ist, kann das Zungenelement 4 bis zum Anschlag der Pedalplatte 2 an den Anschlägen 12, 13 der Trägerplatte 3 bewegt werden. Wenn somit eine maximale Fußkraft ausgeübt wird, liegt das Zungenelement 4 in der Ebene der Trägerplatte 3 und somit in einer Ebene mit dem Magnetkreis F. Dabei stützt sich die Pedalplatte 2 an den Anschlägen 12, 13 der Trägerplatte 3 ab. Wenn der Fahrer seinen Fuß vom Bremspedal hebt, wird das Zungenelement 4 aufgrund seiner federnden Ausgestaltung wieder in seine Ausgangsposition zurückbewegt. Im beschriebenen Ausführungsbeispiel ist das Zungenelement 4 aus Federstahl hergestellt. Es ist jedoch auch denkbar, Federelemente oder Gummielemente am Zungenelement 4 anzuordnen, welche das Zungenelement 4 wieder in seine Ausgangsposition zurückstellen.

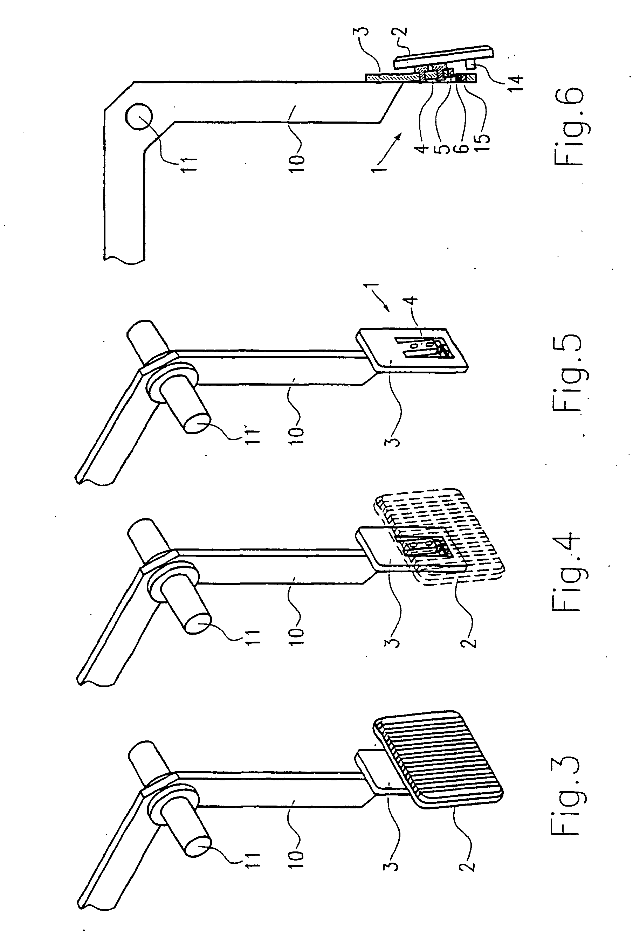

In den Fig. 3 bis 8 ist ein zweites Ausführungsbeispiel einer erfindungsgemäßen Kraftmessvorrichtung dargestellt. Gleichartige Teile sind hierbei mit den gleichen Bezugszeichen wie im ersten Ausführungsbeispiel bezeichnet.

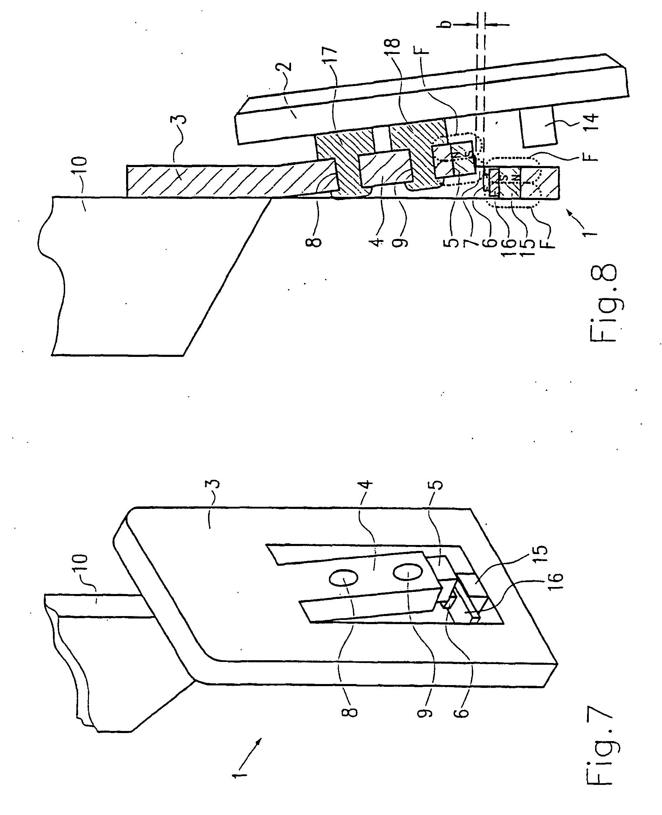

Wie insbesondere in den Figuren 7 und 8 dargestellt, umfasst die Kraftmessvorrichtung 1 ebenfalls eine Trägerplatte 3, welche mit einem um ein Lager 11 drehbar gelagerten Bremspedalhebel 10 fest verbunden ist (vgl. Figuren 3 bis 6). Weiter ist ein Zungenelement 4 vorgesehen, welches einstückig mit der Trägerplatte 3 gebildet ist. Das bewegliche und federnd ausgebildete Zungenelement 4 weist zwei Durchgangsöffnungen 8 und 9 auf, welche zwei Bolzen 17 und 18 aufnehmen, um das Zungenelement 4 fest mit einer Pedalplatte 2 zu verbinden.

Wie in Figur 7 gezeigt, ist das Zungenelement 4 balkenförmig ausgebildet. Am unteren Ende des balkenförmigen Zungenelements 4 ist ein Luftspalt 7 zwischen dem Zungenelement 4 und der Trägerplatte 3 vorgesehen. Wie in Figur 8 gezeigt, weist der Luftspalt 7 eine Breite b auf. Weiter ist am unteren Ende des Zungenelements 4 ein erster Magnet 5 angeordnet. Ein zweiter Magnet 15 ist an der Trägerplatte 3 derart angeordnet, dass er von der Trägerplatte 3 in den Luftspalt 7 vorsteht. Weiter ist am zweiten Magneten 15 eine Leiterplatte 16 sowie ein magnetempfindliches Element 6 angeordnet. (vgl. Figur 8).

Wie weiter in Figur 8 gezeigt, sind die beiden Magnete 5 und 15 derart angeordnet, dass sie gegeneinander gepolt sind. In der Schnittdarstellung von Figur 8 sind die Magnetkreise F der beiden Magneten 5 und 15 dargestellt. Durch diese Anordnung der beiden Magnete 5 und 15 kommt es im Luftspalt 7 durch die gleichgerichtete Polarisierung der beiden Magnete 5 und 15 zu einer starken Feldverdrängung. Dadurch kann ein hoher Messeffekt gewährleistet werden. Weiterhin kann dadurch der Winkel, in welchem das Zungenelement 4 von der Trägerplatte 3 vorsteht, relativ klein gewählt werden. Dadurch ergibt sich eine geringe Bauhöhe der Kraftmessvorrichtung 1.

Die Funktion der Kraftmessvorrichtung im ersten und zweiten Ausführungsbeispiel entspricht der des ersten Ausführungsbeispiel. Die durch das magnetempfindliche Element aufgenommene Änderung der Magnetflussdichte wird in ein Signal umgewandelt, welches mittels der Leiterplatte 16 zu einer Bremssteuereinrichtung zugeführt wird.

Wie in Figur 8 gezeigt, weist die Kraftmessvorrichtung 1 gemäß dem zweiten Ausführungsbeispiel noch zusätzlich ein Anschlagelement 14 auf, welches an der Pedalplatte 2 angebracht ist. Dieses Anschlagelement 14 dient.als mechanischer Anschlag um eine hohe Überlastfähigkeit bereitzustellen. Dadurch kann der Fahrer auch eine Panikbremsung durchführen, bei der Kraftspitzen von über 3000 Newton auftreten können, ohne dass die Kraftmessvorrichtung beschädigt wird. Somit ist eine hohe Überlastfestigkeit der Kraftmessvorrichtung sichergestellt.

Zusammenfassend betrifft die vorliegende Erfindung somit eine Kraftmessvorrichtung mit einer Trägerplatte 3, mindestens einem Magneten 5 und mindestens einem magnetempfindlichen Element 6. Ein elastisch angeordnetes Zungenelement 4 steht zumindest teilweise von der Trägerplatte 3 vor und ist mit einem Plattenelement 2 verbunden. Zwischen dem Zungenelement 4 und der Trägerplatte 3 ist ein Luftspalt 7 gebildet, in welchem das magnetempfindliche Element 6 positioniert ist. Die über das Plattenelement 2 zugeführte, zu messende Kraft führt zu einer Relativbewegung zwischen dem luftspaltseitigen Ende des Zungenelements 4 und der Trägerplatte 3. Dadurch ergibt sich eine Änderung der Magnetfeldgeometrie im.Luftspalt 7. Weiterhin betrifft die vorliegende Erfindung auch ein Verfahren zur Erfassung einer Kraft.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Messvorrichtung zur Erfassung einer Kraft, umfassend:
- eine Trägerplatte (3),
- einen Magneten (5),
- ein magnetempfindliches Element (6) und
- ein Zungenelement (4), welches von der Trägerplatte (3) vorsteht
wobei zwischen dem Zungenelement (4) und der Trägerplatte (3) ein Luftspalt (7) gebildet ist, in welchem das magnetempfindliche Element (6) angeordnet ist.

2. Messvorrichtung zur Erfassung einer Kraft nach Anspruch 1, **dadurch gekennzeichnet, dass** der Magnet (5) am Zungenelement (4) angebracht ist.

3. Messvorrichtung zur Erfassung einer Kraft nach Anspruch 1, **dadurch gekennzeichnet, dass** der Magnet (5) an der Trägerplatte (3) befestigt ist.

4. Messvorrichtung zur Erfassung einer Kraft nach einem der Ansprüche 1 bis 3, **dadurch gekennzeichnet, dass** die Messvorrichtung einen ersten Magneten (5) und einen zweiten Magneten (15) aufweist, wobei der erste Magnet (5) am Zungenelement (4) angeordnet ist und der zweite Magnet (15) an der Trägerplatte (3) angeordnet ist.

5. Messvorrichtung zur Erfassung einer Kraft nach einem der Ansprüche 1 bis 4, **dadurch gekennzeichnet, dass** das Zungenelement (4) einstückig mit der Trägerplatte (3) ausgebildet ist.

6. Messvorrichtung zur Erfassung einer Kraft nach einem der Ansprüche 1 bis 5, **dadurch gekennzeichnet, dass** das Zungenelement (4) federnd ausgebildet ist.

7. Messvorrichtung zur Erfassung einer Kraft nach einem der Ansprüche 1 bis 6, **dadurch gekennzeichnet, dass** die Messvorrichtung zur Begrenzung der Bewegung des Zungenelements (4) einen Anschlag (12, 13, 14) aufweist.

8. Messvorrichtung zur Erfassung einer Kraft nach Anspruch 7, **dadurch gekennzeichnet, dass** ein separater Anschlag (14) an einem Plattenelement (2) ausgebildet ist, welches mit dem Zungenelement verbunden ist oder, dass Teile (12, 13) der Trägerplatte (3) als Anschlag für das mit dem Zungenelement (4) verbundene Plattenelement (2) ausgebildet sind.

9. Messvorrichtung zur Erfassung einer Kraft nach einem der Ansprüche 1 bis 8, **dadurch gekennzeichnet, dass** das Zungenelement (4) als Balken ausgebildet ist.

10. Verfahren zur Erfassung einer Kraft, **dadurch gekennzeichnet, dass** eine über ein bewegliches Zungenelement (4) zugeführte Kraft in eine Relativbewegung zwischen dem Zungenelement (4) und einer Trägerplatte(3) umgewandelt wird, wobei die Relativbewegung zwischen dem Zungenelement (4) und der Trägerplatte (3) zu einer Änderung einer magnetischen Feldstärke führt, welche durch ein in einem Luftspalt (7) zwischen der Trägerplatte (3) und dem Zungenelement (4) angeordneten magnetempfindlichen Element (6) erfassbar ist.

## Claims

1. Measuring device for detecting a force, comprising:
- a carrier plate (3),
- a magnet (5),
- a magnet-sensitive element (6) and
- a tongue element (4) which protrudes from the carrier plate (3),
wherein an air gap (7) in which the magnet-sensitive element (6) is arranged is formed between the tongue element (4) and the carrier plate (3).

2. Measuring device for detecting a force according to Claim 1, **characterized in that** the magnet (5) is mounted on the tongue element (4).

3. Measuring device for detecting a force according to Claim 1, **characterized in that** the magnet (5) is attached to the carrier plate (3).

4. Measuring device for detecting a force according to one of Claims 1 to 3, **characterized in that** the measuring device has a first magnet (5) and a second magnet (15), wherein the first magnet (5) is arranged on the tongue element (4), and the second magnet (15) is arranged on the carrier plate (3).

5. Measuring device for detecting a force according to one of Claims 1 to 4, **characterized in that** the tongue element (4) is constructed in one piece with the carrier plate (3).

6. Measuring device for detecting a force according to one of Claims 1 to 5, **characterized in that** the tongue element (4) is of resilient construction.

7. Measuring device for detecting a force according to one of Claims 1 to 6, **characterized in that** the measuring device has a stop (12, 13, 14) for limiting the movement of the tongue element (4).

8. Measuring device for detecting a force according to Claim 7, **characterized in that** a separate stop (14) is constructed on a plate element (2) which is connected to the tongue element, or **in that** parts (12, 13) of the carrier plate (3) are constructed as a stop for the plate element (2) which is connected to the tongue element (4).

9. Measuring device for detecting a force according to one of Claims 1 to 8, **characterized in that** the tongue element (4) is constructed as a bar.

10. Method for detecting a force, **characterized in that** a force which is fed via a movable tongue element (4) is converted into a relative movement between the tongue element (4) and a carrier plate (3), wherein the relative movement between the tongue element (4) and the carrier plate (3) leads to a change in a magnetic field strength which can be detected by a magnet-sensitive element (6) which is arranged in an air gap (7) between the carrier plate (3) and the tongue element (4).

## Revendications

1. Dispositif de mesure pour détecter une force, comportant
une plaque de support (3),
un aimant (5),
un élément sensible à l'aimantation (6) et
un élément de languette (4) qui dépasse de la plaque de support (3),
un entrefer (7) dans lequel est placé l'élément (6) sensible à l'aimantation étant formé entre l'élément de languette (4) et la plaque de support (3).

2. Dispositif de mesure pour détecter une force selon la revendication 1,
**caractérisé en ce que**
l'aimant (5) est appliqué sur l'élément de languette (4).

3. Dispositif de mesure pour détecter une force selon la revendication 1
**caractérisé en ce que**
l'aimant (5) est fixé à la plaque de support (3).

4. Dispositif de mesure pour détecter une force selon l'une des revendications 1 à 3,
**caractérisé en ce que**
le dispositif de mesure comprend un premier aimant (5) et un deuxième aimant (15), le premier aimant (5) étant placé sur l'élément de languette (4) et le deuxième aimant (15) sur la plaque de support (3).

5. Dispositif de mesure pour détecter une force selon l'une des revendications 1 à 4,
**caractérisé en ce que**
l'élément de languette (4) forme une seule pièce avec la plaque de support (3).

6. Dispositif de mesure pour détecter une force selon l'une des revendications 1 à 5,
**caractérisé en ce que**
l'élément de languette (4) est élastique.

7. Dispositif de mesure pour détecter une force selon l'une des revendications 1 à 6,
**caractérisé en ce que**
le dispositif de mesure comporte une butée (12, 13, 14) pour limiter le mouvement de l'élément de languette (4).

8. Dispositif de mesure pour détecter une force selon la revendication 7,
**caractérisé en ce que**
une butée (14) distincte est formée sur un élément en plaque (2) qui est lié à l'élément en languette ou des parties (12, 13) de la plaque de support (3) servent de butée à l'élément en plaque (2) relié à l'élément de languette (4).

9. Dispositif de mesure pour détecter une force selon l'une des revendications 1 à 8,
**caractérisé en ce que**
l'élément de languette (4) a la forme d'une barre.

10. Dispositif de mesure pour détecter une force,
**caractérisé en ce qu'**
une force transmise par un élément de languette (4) mobile est convertie en un mouvement relatif entre l'élément de languette (4) et une plaque de support (3), le mouvement relatif entre l'élément de languette (4) et la plaque de support (3) provoque alors une modification d'une intensité de champ magnétique qui peut être détectée par un élément sensible à l'aimantation (6) placé dans un entrefer (7) entre la plaque de support (3) et l'élément de languette (4).
